# EUROPEAN PATENT APPLICATION

(11) **EP 2 871 865 A1**
(43) Date of publication of application: **13.05.2015**
(21) Application number: 13306534.2
(22) Date of filing: 08.11.2013
(51) Int. Cl.: H04W 4/00, G06Q 20/32, H04L 29/06, H04L 29/08, H04W 76/02

(54) **Method of managing communication between two secure elements**

(71) Applicant: Gemalto SA, 92190 Meudon (FR)
(72) Inventor: Brun, Alain, 13705 La Ciotat (FR); Chene, Gilles, 13705 La Ciotat (FR)

(57) **Abstract**

The invention is a method of managing communication between a first secure element embedded in a first device comprising a first agent and a second secure element embedded in a second device comprise a second agent. The method comprises the following steps:
- The first device sends a setting data to the second device through a wireless peer-to-peer connection, this setting data reflecting a request to establish a new communication session and to perform an applicative transaction between both secure elements.
- A second wireless connection having both a bandwidth and a range higher than those of the wireless peer-to-peer connection is established between both devices.
- The new communication session is activated between both secure elements through the second wireless connection and through both agents. The new communication session is secured using a secret data stored into both secure elements.
- The applicative transaction is performed via the new communication session.

## Description

### (Field of the invention)

The present invention relates to methods of managing the communication between two secure elements. It relates particularly to methods of managing the communication between two secure elements embedded in two wireless devices.

### (Background of the invention)

Secure elements are small devices comprising a memory, a processing means and an operating system for computing treatments. Such secure elements may comprise a plurality of memories of different types, like nonvolatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards are a kind of secure elements.

A secure element may also be implemented as a virtual entity embedded in a tamper proof device. Such a virtual entity is implemented in software and behaves like a hardware secure element.

Some secure elements that are intended to be used in Telecom domain or Machine-To-Machine (M2M) domain can be able to manage an OTA (Over-The-Air) channel.

The NFC (Near Field Communication) technology is based on the exchanging of data via a magnetic field. A NFC reader has an antenna which is able to modulate the magnetic field and to provide energy to NFC devices. The NFC reader is usually named a PCD (Proximity Coupling Device). A NFC device may be a PICC (Proximity Integrated Circuit Card or Proximity Card) or may embed components which act as logical PICC. A PICC and a PCD communicate thanks to an inductive coupling in a field frequency equal to 13.56 MHz. In particular, the ISO14443 and ISO18092 standards provide modulation technologies and communication protocols which may be used in NFC domain.

In NFC domain, a NFC-enabled device may work according to three operating modes. The reader mode (also named wireless reader mode) allows reading and writing other devices which are seen as a NFC cards. In Card emulation mode, the NFC-enabled acts as a NFC card and can communicate with another NFC device operating in reader mode. The card emulation mode may rely on a secure element embedded in the NFC device. The Peer-to-Peer mode allows doing away with the master role of the reader and the slave role of the card by allowing balanced behavior between two wireless devices. In other words, the P2P mode allows the communication between two NFC devices without the master/slave scheme.

Many NFC devices - like mobile phones - which embed a secure element are able to work according to the three operating modes. Unfortunately, some of these NFC devices give priority to the P2P mode to the detriment of the other operating modes. Provided that the two NFC devices give priority to the P2P mode, they cannot activate neither the reader mode nor the card emulation mode. Thus the secure element embedded in one of such NFC device cannot be accessed by the other NFC device.

There is a need for allowing access to a secure element embedded in a NFC device that gives priority to the P2P mode.

### (Summary of the Invention)

An object of the invention is to solve the above mentioned technical problem.

The object of the present invention is a method for managing communication between a first secure element embedded in a first device and a second secure element embedded in a second device. Said first and second devices are configured to establish a wireless peer-to-peer connection when placed close to each other. Said first device comprises a first agent. Said second device comprises a second agent. The method comprises the following steps:
- said first device sends a setting data to said second device through the wireless peer-to-peer connection, said setting data reflecting a request to establish a new communication session and to perform an applicative transaction between said first and second secure elements,
- said second device establishes a second wireless connection with said first device, said second wireless connection having both a bandwidth and a range higher than those of the wireless peer-to-peer connection,
- activating the new communication session between said first and second secure elements through the second wireless connection and through said first and second agents, said new communication session being secured using a secret data stored into said first and second secure elements, and
- performing the applicative transaction via said new communication session.

Advantageously, the wireless peer-to-peer connection may be compliant with NFC and the second wireless connection may be compliant with Wi-Fi Direct or Bluetooth.

Advantageously, the setting data may specify specific settings to be used for establishing the second wireless connection or the new communication session and the setting data may be sent using NFC Data Exchange Format

Advantageously, the setting data may specify an application to be activated in the second secure element.

Advantageously, the first device may comprise an application configured to retrieve the setting data and to initiate the sending of the setting data through the wireless peer-to-peer connection.

Another object of the invention is a system comprising first and second devices configured to establish a wireless peer-to-peer connection when placed close to each other. Said first device comprises a first secure element and a first agent. Said second device comprises a second secure element and a second agent. The first device is configured to send a setting data to said second device through the wireless peer-to-peer connection, said setting data corresponding to a request to establish a new communication session and to perform an applicative transaction between said first and second secure elements. The second device is configured to establish a second wireless connection with said first device in response to the request, said second wireless connection having both a bandwidth and a range higher than those of the wireless peer-to-peer connection. Said first and second secure elements are configured to take initiative to activate the new communication session between them through the second wireless connection and through said first and second agents, to secure the new communication session with a secret data stored into said first and second secure elements and to perform the applicative transaction through the new communication session.

Advantageously, the wireless peer-to-peer connection may be compliant with NFC and the second wireless connection may be compliant with Wi-Fi Direct or Bluetooth.

Advantageously, the setting data may specify specific settings to be used for establishing the second wireless connection or the new communication session and the setting data may be sent using NFC Data Exchange format

Advantageously, the setting data may specify an application to be activated in the second secure element.

Advantageously, said first device may comprise an application configured to retrieve the setting data and to initiate the sending of the setting data through the wireless peer-to-peer connection.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a system comprising two wireless devices configured to manage a communication according to the invention; and
- Figure 2 is an example of a flowchart for managing the communication between two secure elements according to the invention.

### (Detailed description of the preferred embodiments)

The invention may apply to any types of wireless device including a secure element and able to operate in several wireless communication modes. These devices may be portable devices like mobile phone, tablet PC or Electronic Funds Transfer Terminals for payment. These devices may be fixed devices like access control machine for transport network.

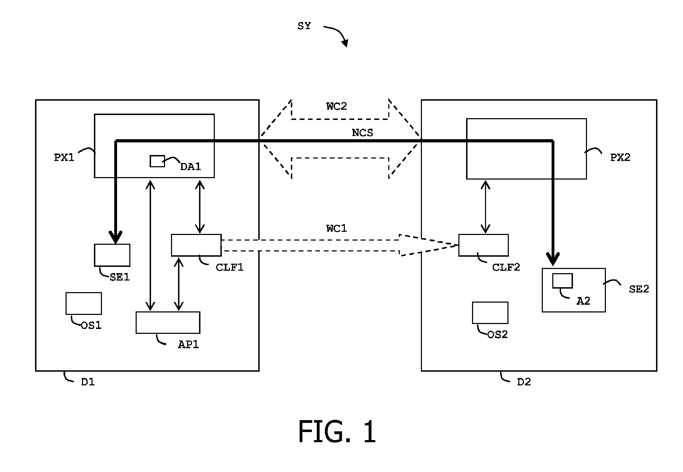

**Figure 1** shows an example of architecture of a system comprising two devices D1 and D2 according to the invention.

In this example, the devices D1 and D2 are mobile phones.

Both devices D1 and D2 are configured to establish a wireless peer-to-peer connection WC1 when placed close to each other.

The device D1 comprises an operating system OS1, a secure element SE1, a NFC modem CLF1 also called Contactless Frontend (CLF), an application AP1 and an agent PX1. The secure element SE1 may be a removable or fixed component. The Contactless Frontend CLF1 allows the device D1 to communicate through a NFC channel. The agent PX1 is a software component and comprises the setting data DA1.

The application AP1 is a software applicative component dedicated to a preset service. For example, the application AP1 may be designed for managing a payment service. The application AP1 is configured to retrieve the setting data DA1 from the agent PX1.

Alternatively, the setting data DA1 may be stored in an entity distinct from the agent PX1, like the secure element SE1 or even the application AP1 itself. In this case, the application AP1 is configures to get the setting data from the relevant location.

The device D2 comprises an operating system OS2, a secure element SE2, a Contactless Frontend CLF2 and an agent PX2. The agent PX2 is a software component. The secure element SE2 comprises an application A2 designed to perform an applicative transaction with the secure element SE1.

For example, in a Payment use case, the device D1 may be the smartphone of the customer and the device D2 may be the Mobile Point Of Sale Device doing the payment transaction.

In another example related to Transport ticket validity Control in transport use case, the device D1 may be the smartphone of the user and the device D2 may be the smartphone of the controller.

The invention does not imply a specific relation between the applicative transaction and the application AP1 of the device D1.

The setting data DA1 corresponds to a request to establish a new communication session NCS and to perform an applicative transaction between the two secure elements SE1 and SE2. More precisely, the setting data DA1 reflects a request to perform an applicative transaction between the application A2 and an entity embedded in the secure element SE1.

This embedded entity may be an applet for specific use case based on proprietary use case like Boarding pass, Retail shopping, transport or PKI.

The embedded entity may also be a storage area, for use case using Mifare © technology like vending machine, access control, transport, entertainment and stadium, etc.

The setting data DA1 is intended to be sent to the device D2 using a NFC Data Exchange format (NDEF) as specified in NFC standards like NDEF 1.0 dated 2006-07-24 for example.

The device D2 is configured to establish a wireless connection WC2 with the device D1 in response to the request so that the wireless connection WC2 has both a bandwidth and a range higher than those of the wireless peer-to-peer connection WC1.

For example, the wireless peer-to-peer connection WC1 may be establish using the NFC technology while the wireless connection WC2 is established using Wi-Fi Direct © or Bluetooth ©. The choice of the type of technology to be used for the wireless connection WC2 may be made by the operating system OS2.

At Figure 1, both wireless connections WC1 and WC2 are shown in dotted lines.

The secure elements SE1 and SE2 are configured to secure the communication session NCS with a secret data. For instance, the secret data may be a shared secret key stored in both secure elements SE1 and SE2. Alternatively, the secret data may correspond to a first key stored in the secure element SE1 and a second key stored in the secure element SE2. Such a couple may be implemented through a public key (PKI) scheme.

In one embodiment, the operating systems OS1 and OS2 may be Android™ and the P2P mode may be Android Beam™.

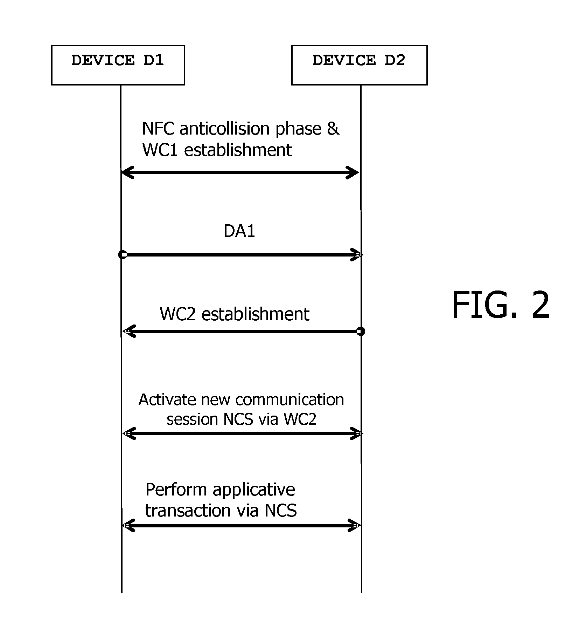

**Figure 2** shows an example of a flowchart for managing the communication between two secure elements according to the invention.

The devices D1 and D2 are assumed to have architectures similar to those described at Figure 1.

At a first step, the devices D1 and D2 are place closed to each other and a NFC anti-collision phase starts for establishing a wireless peer-to-peer connection WC1.

At a second step, the user of device D1 is prompted to confirm the sending of a message by the application AP1 to the device D2. Once user has given his consent, the application AP1 retrieves the setting data DA1 from the agent PX1 and provides it to the Contactless Frontend CLF1 for sending to the device D1 through the wireless peer-to-peer connection WC1.

The application AP1 and the agent PX1 communicate using a technology depending on the operating system of the device D1. In a preferred embodiment, it would be based on API, callback, event mechanisms.

Preferably, the NDEF message is static as the setting data DA1 and the setup is done by application AP1.

At a third step, the wireless connection WC2 is established between the devices D1 and D2, according to setting managed by the operating system OS2.

At a fourth step, the application A2 initiates a secure communication session NCS with the secure element SE1 through the wireless connection WC2 and through the agents PX1 and XP2. Alternatively, the secure communication session NCS may be initiated by the secure element SE1.

At a fifth step, the targeted applicative transaction is carried out via the communication session NCS.

For example, the applicative transaction may be a payment, a transfer of digital rights, request for using a service or a request for accessing a transport system.

Advantageously, the setting data DA1 may comprise specific setting to be used for establishing the wireless connection WC2. For instance, the specific setting may identify the nature of wireless standard (i.e. Wi-Fi, Wi-Max, Bluetooth) or a security level.

Advantageously, the setting data DA1 may comprise specific setting to be used for establishing the communication session NCS. For instance, the specific setting may identify The AID (identifier) of the applet and the payload of data to be exchanged between the application A2 and secure element SE1.

Thanks to the invention, it is not necessary to maintain the devices D1 and D2 in the vicinity of one another to perform the entire applicative transaction. The short range wireless connection is used for pairing the two secure elements SE1 and SE2. The short range wireless connection is not used for performing the applicative transaction as such.

It must be understood, within the scope of the invention, that the above-described embodiments are provided as non-limitative examples. In particular, the role of the Application AP1 may be directly managed by the agent PX1.

The invention is not limited to NFC communication and applies to any kinds of contactless communication.

## Claims

1. A **method** for managing communication between a first secure element (SE1) embedded in a first device (D1) and a second secure element (SE2) embedded in a second device (D2), said first and second devices (D1, D2) being configured to establish a wireless peer-to-peer connection (WC1) when placed close to each other,
**characterized in that** said first and second devices (D1, D2) comprise a first agent (PX1), respectively a second agent (PX2) and **in that** the method comprises the following steps:
- said first device (D1) sends a setting data (DA1) to said second device (D2) through the wireless peer-to-peer connection (WC1), said setting data (DA1) reflecting a request to establish a new communication session (NCS) and to perform an applicative transaction between said first and second secure elements (SE1, SE2),
- said second device (D2) establishes a second wireless connection (WC2) with said first device (D1), said second wireless connection (WC2) having both a bandwidth and a range higher than those of the wireless peer-to-peer connection (WC1),
- activating the new communication session (NCS) between said first and second secure elements (SE1, SE2) through the second wireless connection (WC2) and through said first and second agents (PX1, PX2), said new communication session (NCS) being secured using a secret data stored into said first and second secure elements (SE1, SE2), and
- performing the applicative transaction via said new communication session (NCS).

2. A method according to claim 1, wherein the wireless peer-to-peer connection (WC1) is compliant with NFC and the second wireless connection (WC2) is compliant with Wi-Fi Direct or Bluetooth.

3. A method according to any of claims 1 to 2, wherein the setting data (DA1) specifies specific settings to be used for establishing the second wireless connection (WC2) or the new communication session (NCS) and wherein the setting data (DA1) is sent using NFC Data Exchange Format

4. A method according to any of claims 1 to 2, wherein the setting data (DA1) specifies an application (A2) to be activated in the second secure element (SE2).

5. A method according to claim 1, wherein said first device (D1) comprises an application (A1) configured to retrieve the setting data (DA1) and to initiate the sending of the setting data (DA1) through the wireless peer-to-peer connection (WC1).

6. A **system** (SY) comprising first and second devices (D1, D2) configured to establish a wireless peer-to-peer connection (WC1) when placed close to each other, said first and second devices (D1, D2) comprising a first secure element (SE1), respectively a second secure element (SE2),
**characterized in that** said first and second devices (D1, D2) comprise a first agent (PX1), respectively a second agent (PX2),
**in that** said first device (D1) is configured to send a setting data (DA1) to said second device (D2) through the wireless peer-to-peer connection (WC1), said setting data (DA1) corresponding to a request to establish a new communication session (NCS) and to perform an applicative transaction between said first and second secure elements (SE1, SE2),
**in that** said second device (D2) is configured to establish a second wireless connection (WC2) with said first device (D1) in response to the request, said second wireless connection (WC2) having both a bandwidth and a range higher than those of the wireless peer-to-peer connection (WC1), and
**in that** said first and second secure elements (SE1, SE2) are configured to take initiative to activate the new communication session (NCS) between them through the second wireless connection (WC2) and through said first and second agents (PX1, PX2), to secure the new communication session (NCS) with a secret data stored into said first and second secure elements (SE1, SE2) and to perform the applicative transaction through the new communication session (NCS).

7. A system according to claim 6, wherein the wireless peer-to-peer connection (WC1) is compliant with NFC and the second wireless connection (WC2) is compliant with Wi-Fi Direct or Bluetooth.

8. A system according to claim 6, wherein the setting data (DA1) specifies specific settings to be used for establishing the second wireless connection (WC2) or the new communication session (NCS) and wherein the setting data (DA1) is sent using NFC Data Exchange format

9. A system according to claim 6, wherein the setting data (DA1) specifies an application (A2) to be activated in the second secure element (SE2).

10. A system according to claim 6, wherein said first device (D1) comprises an application (A1) configured to retrieve the setting data (DA1) and to initiate the sending of the setting data (DA1) through the wireless peer-to-peer connection (WC1).
